# EUROPEAN PATENT APPLICATION

(11) **EP 3 525 475 A1**
(43) Date of publication of application: **14.08.2019**
(21) Application number: 19156132.3
(22) Date of filing: 08.02.2019
(51) Int. Cl.: H04N 21/8549, H04N 21/44, G06K 9/00, H04N 21/234, G06F 16/738

(54) **ELECTRONIC DEVICE AND METHOD FOR GENERATING SUMMARY IMAGE OF ELECTRONIC DEVICE**

(30) Priority: 13.02.2018 KR 20180017418
(71) Applicant: Samsung Electronics Co., Ltd., Suwon-si, Gyeonggi-do, 16677 (KR)
(72) Inventor: KIM, Jongho, Gyeonggi-do (KR)
(74) Representative: Walaski, Jan Filip

(57) **Abstract**

Disclosed is an electronic device. The electronic device includes a storage configured to store a video content; and a processor configured to, based on one of each scene comprising at least a part of the video content being selected, combine associated scenes having an attribute associated with the selected scene and to generate a summary image of the video content. The each scene may include frames which successively express associated image components from among frames of the video content.

## Description

The disclosure relates to an electronic device which generates a summary image by combining scenes which are associated with a specific scene and a method for generating a summary image thereof.

A summary image which includes important scenes in the image contents can be provided, in order to efficiently guide many image contents to a user. A service provider can generate a summary image by directly editing important or interesting highlight scenes from the image content into short movie clips.

Recently, various VOD and streaming image services have been increasing via Internet and mobile. As an amount of image contents and a watching method are diversified, users prefer a method of watching image contents according to personal interests or interested fields, instead of the existing method of being provided with image contents unilaterally.

However, there is a problem that conventional summary images cannot reflect various viewer preferences. Accordingly, there is a need for a summary technique for briefly and quickly transmitting information about an image which viewers desire to watch.

Example aspects of the disclosure address at least the above-mentioned problems and/or disadvantages and to provide at least the advantages described below. The present disclosure provides an electronic device which generates a scene having a high relevance with a specific scene that is selected based on a relationship among appearing characters and relevance by events, and a method for generating a summary image thereof.

The electronic device includes a storage configured to store at least a part of a video content; and a processor configured to combine associated scenes having an attribute associated with a selected scene and generate a summary image of the video content based on one of each scene comprising at least a part of the video content being selected.

Each scene may include frames which successively express associated image components from among frames of the video content.

The processor may detect at least one of a character attribute of the each scene, a background attribute of the each scene, and an event attribute occurring in the each scene, store the same in the storage, and compare an attribute of the selected scene with an attribute of each scene stored in the storage.

The processor may detect a character attribute of the each scene, a background attribute of the each scene, and an event attribute occurring in the each scene respectively and store the same in the storage, wherein the processor may compare the attributes with the attributes of the selected scene by attributes and identify associated scenes.

The processor may detect at least one of appearance frequency of each character appearing in the each scene and a facial expression type of the character and store the same in the storage as a character attribute of the each scene.

The processor may separate a background image from image components included in the each scene, classify each background image by types, and store the classification result in the storage as a background attribute of the each scene.

The processor may classify an event of the each scene based on at least one of a posture and a position of a character appearing in the each scene, and store the classification result in the storage as an event attribute of the each scene.

The processor may apply different weights for the character attribute, the background attribute, and the event attribute based on a type of the video content and calculate (determine) similarity of each attribute.

The processor, for a scene in which a plurality of characters appear, may classify a relation among the plurality of characters using at least one of a facial expression of each of the plurality of characters and the event attribute, and store the classification result in the storage as the character relation attribute of the scene.

The electronic device may further include a display configured to display at least a part of the video content.

The processor may, based on a user selection being input while at least a part of the video content is displayed, recognize a scene displayed at a timing of the input as the selected image.

The processor may identify frames which successively express the associated image components based on at least one of color histogram and edge histogram.

A method for generating a summary image of an electronic device may include classifying frames which comprise at least a part of a video content by each scene; receiving selection of one of the scenes; and combining associated scenes having an attribute associated with the selected scene and generating a summary image of the video content.

Each scene may include frames which successively express associated image components from among frames of the video content.

The method may further include detecting at least one of a character attribute of the each scene, a background attribute of the each scene, and an event attribute occurring in the each scene and storing the same.

The generating may further include detecting an attribute of the selected scene; and comparing the attributes of prestored scenes with the attributes of the selected scene and identifying the associated scenes.

The method may further include detecting a character attribute of the each scene, a background attribute of the each scene, and an event attribute occurring in the each scene respectively and storing the same.

The generating may further include detecting an attribute of the selected scene; and comparing attributes of prestored scenes with attributes of the selected scenes and identifying the associated scenes.

The character attribute may be information on at least one of appearance frequency of each character appearing in the each scene and a facial expression type of the character.

The background attribute may be information on a type of a background image which is separated from image components included in the each scene.

The event attribute may be information on a type of an event which occurs in the each scene based on at least one of a posture and a position of a character appearing in the each scene.

The generating may include applying different weights for the character attribute, the background attribute, and the event attribute based on a type of the video content and calculating (determining) similarity of each attribute.

The method may further include, for a scene in which a plurality of characters appear, classifying a relation among the plurality of characters using at least one of a facial expression of each of the plurality of characters and the event attribute, and storing the classification result in the storage as the character relation attribute of the scene.

The method may further include identifying frames which successively express the associated image components based on at least one of color histogram and edge histogram.

As described above, according to various example embodiments, a summary image which is generated based on a viewer's interest or concern can be conveniently obtained.

The above and other aspects, features, and advantages of certain embodiments of the disclosure will be more apparent from the following detailed description, taken in conjunction with the accompanying drawings, in which:
FIGS. 1A and 1B are block diagrams illustrating example configurations of an electronic device according to an example embodiment;
FIG. 2 is a diagram illustrating an example of determining a character attribute based on detection frequency according to an example embodiment;
FIGS. 3 and 4 are diagrams illustrating various examples of attribute information which analyze scenes according to an example embodiment;
FIGS. 5 and 6 are diagrams illustrating example attributes of each scene when there are a plurality of appearing characters according to an example embodiment;
FIG. 7 is a diagram illustrating an example of a method of generating a summary image based on attributes according to an example embodiment;
FIG. 8 is a block diagram illustrating an example configuration of an electronic device according to another example embodiment;
FIG. 9 is a diagram illustrating an example method for generating a summary image according to an example embodiment; and
FIG. 10 is a flowchart illustrating an example method for generating a summary image of an electronic device according to an example embodiment.

The terms and words used in the following description and claims are not limited to the bibliographical meanings, but, are merely used to enable a clear and consistent understanding of the disclosure. Accordingly, it should be apparent to those skilled in the art that the following description of various embodiments of the disclosure is provided for illustration purpose only and not for the purpose of limiting the disclosure as defined, for example, by the appended claims and their equivalents.

To include an element may refer, for example, to including other elements, not excluding other elements unless specifically stated otherwise. Further, various elements and regions in the drawings are schematically illustrated. Accordingly, the spirit of the present disclosure is not limited by the relative size or spacing depicted in the accompanying drawings.

The expression 'at least one of a, b, and c' means that at least one of 'a', 'b', 'c', 'a and b', 'a and c', 'b and c', b, and c'.

The disclosure will be described in greater detail below with reference to the accompanying drawings.

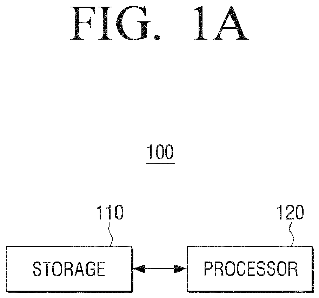

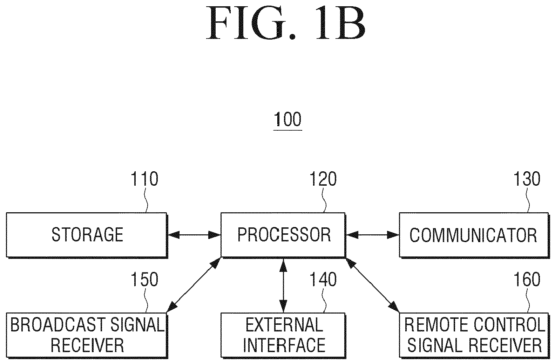

FIGS. 1A and 1B are block diagrams illustrating example configurations of an electronic device according to example embodiments.

An electronic device 100 may be implemented, for example, and without limitation, as a television with a built-in program capable of executing various embodiments of the present disclosure, but is not limited thereto and may, for example, and without limitation, be a personal computer, a laptop computer, a tablet, a smart phone, and a set-top box, or the like. The electronic device 100 may, for example, and without limitation, be implemented as a server, or the like. When the electronic device 100 is implemented as a server, the server may, for example, generate a summary image of the image content according to various embodiments of the present disclosure, transmit the generated summary image to an external electronic device such as a TV, and output a summary image from an external electronic device.

According to FIG. 1A, the electronic device 100 includes a storage 110 and a processor (e.g., including processing circuitry) 120.

The storage 110 may store various data, programs, and/or applications for driving / controlling the electronic device 100. The storage 110 may store control programs for controlling various configurations within the electronic device 100, applications initially provided from a manufacturer or downloaded from outside, databases or related data.

The storage 110 may be implemented, for example, as an internal memory such as, for example, and without limitation, a ROM, a RAM included in the processor 120, a memory separate from the processor 120, or the like. In this case, the storage 110 may be implemented, for example and without limitation, in a form of a memory embedded in the electronic device 100, a memory detachable to the electronic device 100, or the like, depending on the purpose of data storage. For example, data for driving the electronic device 100 may be stored in a memory embedded in the electronic device 100, and data for the extended function of the electronic device 100 may be stored in a memory detachable to the electronic device 100. The memory embedded in the electronic device 100 may be implemented, for example, and without limitation, in the form of a non-transitory memory, a transitory memory, a hard disk drive (HDD), a solid state drive (SSD), or the like.

For example, the storage 110 may store at least some of the video contents which are subject to be a summary image, according to various embodiments of the present disclosure. The entire video content may be stored in the storage 110, but only a part of the video content may be stored in the storage 110. For example, in the case of a streaming video, only a part of the video content is stored in the storage 110.

The storage 110 may store a character attribute of each scene of a video content, a background attribute of each scene, and an event attribute of each scene.

For example, each scene may include frames that continuously represent associated image components from among frames of video contents. An image component may refer, for example, and without limitation, to a person, an object, a background, and the like which comprise one image frame. The associated image elements may refer, for example, and without limitation, to a specific person, a specific object, a specific background, or the like.

The storage 110 may store not only video contents but also data related to the video contents. For example, the storage 110 may store not only MPEG-format video content data but also data that the MPEG data is decoded by the processor.

The processor 120 may include various processing circuitry and controls overall operations of the electronic device 100.

The processor 120 may include various processing circuitry, such as, for example, and without limitation, a digital signal processor (DSP) for processing a digital signal, a microprocessor, a Time Controller (TCON), or the like, but is not limited thereto, and may include, for example, and without limitation, at least one of a central processing unit (CPU), a microcontroller unit (MCU), a micro processing unit (MPU), a controller, an application processor (AP), a communication processor (CP), an ARM processor, and the like. The processor 120 may be implemented as a system on chip (SoC), a large scale integration (LSI) with a built-in processing algorithm, or a field programmable gate array (FPGA) format.

The processor 120 may include, for example, a CPU (not shown), a read-only memory (ROM) (or non-transitory memory) storing a control program for controlling the electronic device 100, and a random-access memory (RAM) (or transitory memory) for storing data input from outside the electronic device 100 or used as a storage area corresponding to various tasks performed by the electronic device 100.

The processor 120 may execute an Operating System (OS), a program, and various applications stored in the storage 110 when a preset event occurs. The processor 120 may include, for example, and without limitation, a single core, dual core, triple core, quad core, and cores of the multiple times.

The CPU may access the storage 110 and perform booting using the O / S stored in the storage 110. Various operations may be performed using various programs, contents, and data stored in the storage 110.

The processor 120 may generate a summary image of the video content. The processor 120 may automatically generate and store a summary image when the video content is stored in the electronic device 100 and/or may generate a summary image when a user's command is input.

For example, the processor 120 may group the frames comprising each scene based on the section in which the camera viewpoint changes in the video content, and distinguish the frames. According to an example embodiment, the processor 120 may identify frames that continuously represent associated image components based on at least one of a color histogram and an edge histogram. The processor 120 may compare frames and identify frames of which at least one of color histogram and edge histogram is equal to or less than a preset threshold value as associated image components to identify one scene.

For example, a frame in which it is assumed that a character reads a book in the living room. The color distribution or the edge distribution in each frame may not be greatly changed even if a character is added or a camera angle is changed in a frame forming a scene of reading a book in the living room. When a frame is changed to a frame in which a person is riding a bicycle outdoors, the difference between the color distribution and the edge distribution may be greater than a preset threshold value as compared with a frame that forms a scene of reading a book in the living room. In this manner, the processor 120 may group the frames comprising each scene and store the groups in the storage 110. Details of various example scenes will be described below.

By analyzing each frame comprising the scenes using the processor 120, scenes represented by the frames may be identified. Frame analysis can be done in various ways. In one example, the processor 120 may divide all pixels in one frame into blocks of n * m pixels. The processor 120 may calculate (determine) the feature value of each block. The processor 120 may compare the feature values of the respective blocks, search for consecutively arranged blocks having similar feature values, and determine the detected blocks as edges of the image components. The processor 120 may detect the determined edge and identify the shape, size, location, color, etc. of each image component. The processor 120 may analyze features such as the identified shape, size, position, color, and the like based on the data stored in the storage 110 or other memory, and estimate the image component of the corresponding image component. If the estimated image component is the lips or eyes of a person, the processor 120 may determine even whether the person is crying or smiling based on the lip shape, the exposure of the teeth, eye shape, color, and so on. In this manner, the processor 120 may determine the characteristics of the respective image components and group the frames in a unit of a scene.

The processor 120 may store information on the divided scenes in the storage 110. The stored information may include not only frame information on each scene but also attribute information of the scene. The processor 120 may select related scenes based on the attribute information.

For example, the processor 120, when one of the stored scenes is selected, may combine associated scenes having associated attributes with the selected scenes and generate a summary image of the video content.

The summary image may be generated for entire video content or a part of the video content, or one summary image can be generated with respect to a plurality of video contents.

In the case of a plurality of video contents, the processor 120 may, for example, search for a scene associated with the selected scene from a plurality of videos. For example, assuming that a scene selected by the user is a scene in which a person "BBB" appears in the contents of one episode of the drama "AAA", the processor 120 may search all contents of other episodes of "AAA" drama and generate scenes where "BBB" appears in one summary image.

The attributes comprising each scene may include at least one of a character attribute of each scene, a background attribute of each scene, and an event attribute in each scene.

The character attribute may refer, for example, and without limitation, to information about a person, an animal, an object, or the like, and a background attribute may refer, for example, and without limitation, to information describing the background of the scene. The event attribute may refer, for example, and without limitation, to information for determining what kind of event occurs in the scene.

The processor 120 may detect at least one of a character attribute of each scene, a background attribute of each scene, and an event attribute occurring in each scene, store the attributes in the storage 110, and compare attributes of each scene stored in the storage 110. For example, the processor 120 may determine that scenes in which a person estimated to be "PPP" have the same character attribute. In addition, the processor 120 may determine that scenes in which the background of the character is estimated as a sea have the same background attributes, and scenes estimated to have physical conflicts between characters can be determined to have the same event attribute. The processor 120 may detect scenes having the same attribute as associated scenes.

Similarity among attributes can be calculated (determined) in an arithmetical manner. The processor 120 may compare each attribute with attributes of the selected scenes and identify whether the scenes are associated scenes.

The processor 120 may detect at least one of the appearance frequency of each character appearing in each scene and the facial expression type of the character, and may store one of the appearance frequency and the facial expression as the character attribute of each scene in the storage.

As described above, when a summary image for a specific person "PPP" is requested, the processor 120 may generate a summary image of the scenes including the person. When a scene where a person having a leading role is requested, the processor 120 may, for example, classify a leading role and a sub role based on the number of appearances or role information, and generate scenes where the leading role appears as a summary image.

According to an example embodiment of the present disclosure, it is assumed that the electronic device 100 is implemented as a server. The server may, for example, generate a summary image of the video content in accordance with various embodiments of the present disclosure, transmit the generated summary image to an external electronic device such as a TV, and output a summary image from the external electronic.

For example, at least some of the video contents may be stored in the server, and one scene of the contents may be selected through the external electronic device. For example, a specific scene may be selected by a user during watching TV, and the TV may transmit information about the selected scene to the server. The server may identify a scene associated with the selected scene based on at least one of a character attribute, a background attribute, an event attribute, and a character relation attribute. Details of identifying the associated scenes have been described above, so a detailed description thereof will not be repeated here. The server may combine the scenes associated with the selected scene and transmit the generated summary image to an external electronic device (e.g., TV).

FIG. 1B is a block diagram illustrating an example configuration of the electronic device of FIG. 1A.

According to FIG. 1B, the electronic device 100 includes a storage 110, a processor (e.g., including processing circuitry) 120, a communicator (e.g., including communication circuitry) 130, an external interface (e.g., including interface circuitry) 140, a broadcast signal receiver 150, and a remote control receiver 160. Among the configurations shown in FIG. 1B, a detailed description of configurations overlapping with those shown in FIG.iA may not be repeated here.

The communicator 130 may include various communication circuitry configured to communicate with an external server (not shown). The communicator 130 may be implemented as various communication modules including various communication circuitry, such as, for example, and without limitation, BlueTooth (BT), Wireless Fidelity (WI-FI), Wi-Fi Direct, Zigbee, Serial Interface, Universal Serial Bus (USB), Near Field Communication (NFC), Z-wave, or the like.

For example, the communicator 130 may receive video contents from an external server. In addition, the communicator 130 may upload the summary image to the external server under the control of the processor 120.

The external interface 140 may include various interface circuitry and be implemented, for example, as an input / output port for transmitting a summary image to an external display device (not shown). For example, the external interface 140 may transmit the video / audio signal together to the external display device under the control of the processor 120, and/or may transmit the video / audio signal to the external display device, respectively. When the video / audio signals are transmitted together to an external display device, the input / output port may be implemented, for example, and without limitation, as a high definition multimedia interface (HDMI), display port (DP), Thunderbolt, and the like.

The broadcast signal receiver 150 may include various circuitry configured to receive the tuned broadcast signal. The broadcasting signal receiver 150 may include various circuitry, such as, for example, and without limitation, a tuner, a demodulator, an equalizer, a decoder, a scaler, or the like. The broadcast signal receiver 150 may receive the broadcast signal tuned by the tuner and perform various signal processing such as, for example, and without limitation, demodulation, equalization, decoding, scaling, or the like, to restore the video content included in the broadcast signal. The restored video content may be output through an output device such as, for example, and without limitation, a speaker (not shown) under the control of the processor 120, transferred to an external device through the communicator 130, stored in the storage 110, or the like. The processor 120 may generate a summary image of the stored broadcast signal content in a manner the same as or similar to that described above.

The remote control signal receiver 160 may include various circuitry configured to receive a remote control signal sent from a remote control device (not shown). The remote control signal receiver 160 may be implemented, for example, and without limitation, as an IR module, or the like, but is not limited thereto. For example, when the remote control signal is received by the Bluetooth method, the remote control signal receiver 160 is not separately provided, and the Bluetooth module in the communicator 130 may serve as a remote control signal receiver.

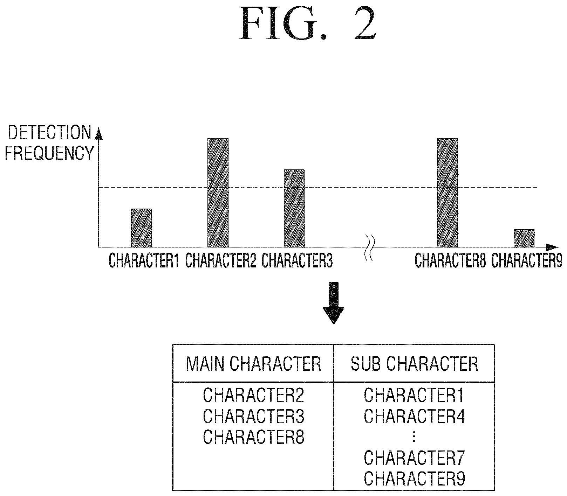

FIG. 2 is a diagram illustrating an example of determining a character attribute based on detection frequency according to an example embodiment.

According to FIG. 2, the processor 120 may detect at least one of the appearance frequency of each character appearing in each scene and the facial expression type of the character, and store the same in the storage 110 as the character attribute of each scene. When the processor 120 detects information on an appearing character, the processor 120 may detect, for example, the face of the character in each scene and may measure the frequency of appearance of the detected face. The processor 120 can distinguish between the main character and the sub character of the video content by, for example, comparing frequencies appearing in the moving image content for each character. For example, the frequency may be the number of scenes in which each character appears.

The processor 120, when the frequency of appearance in the video contents is greater than or equal to a threshold value, may identify a main character, and when the frequency of appearance is less than a threshold value, may identify a sub character and exclude the sub character from the summary image, but the disclosure is not limited thereto.

As illustrated in FIG. 2, if there are a plurality of characters (for example, character 1 to character 9) appearing in the video content, the processor 120 may detect the frequency of appearance of character 1 to character 9 and obtain information on frequency of appearance by characters. The processor 120 may, for example, identify (determine) character 2, character 3, and character 8 which appear as much as a preset threshold value or more as main characters, and identify character 1, character 4 to character 7, and character 9 as a sub character.

The processor 120 may, for example, identify only a preset number of characters as main characters based on the frequency of appearance. For example, if the number of main characters is set to two persons, the processor 120 may identify character 2 and character 8 having the highest frequency of appearance as main characters.

When searching for an associated scene based on the facial expression type, the processor 120 may analyze the facial expression of each character. Face detection, face recognition, and the like can be used to detect facial expressions. Since this technique is a conventional technique, a detailed description will not be provided here.

For example, a smiling facial expression, a happy facial expression, a sad facial expression, and the like may be classified as "friendly facial expression types", and absence of expression, surprised facial expression and the like may be classified as "neutral facial expression types", and an angry facial expression, a scary facial expression, and frowning facial expression may be be classified as a "hostile facial expression type."

The processor 120 may, for example, separate a background image from image components included in each scene, classify each background image by types, and store a classification result in the storage 110 as background attributes of each scene.

When the processor 120 detects a background area in which a character appears, the processor 120 may separate an object area in the scene and recognize the background area and classify the background area as a previously stored type. For example, techniques such as scene description and place detection can be used to detect the background area. Since this technique is a conventional technology, a detailed description thereof will not be provided.

For example, a house, a bed room, a kitchen, and so on is classified as "indoor type", street, park, bridge, and so on are classified as "outdoor type", and mountain, river, and sea may be classified as "nature type." The disclosure is not limited thereto, and a background area may be classified as various types such as including "nature type" in "outdoor type."

When a plurality of background area types are detected from a frame included in one scene unit, the processor 120 may recognize a most frequently detected background as a background area of the corresponding scene.

The processor 120 may classify an event in each scene based on at least one of a posture or position of a character appearing in each scene and store a classification result in the storage 110 as an event attribute of each scene.

For example, when a character is detected in a sitting posture and an object called a "book" is detected, the processor 120 may combine the detected information to identify the event attribute as an event in which a character is reading a book while sitting. For example, a technology such as an action detection can be used to detect an event. Since this technique is a conventional technology, a detailed description will not be provided here.

The processor 120, for a scene in which a plurality of characters appear, may, for example, and without limitation, classify a relationship among a plurality of characters using at least one of a facial expression of each of a plurality of characters and an event attribute and store the classification result in the storage 110 as a character relation attribute of a scene.

When a plurality of characters appear, the processor 120 may, for example, and without limitation, classify the events according to at least one of the postures and positions of the plurality of characters as described above, and classify a relation among the plurality of characters based on at least one of facial expressions of the plurality of characters and event attributes. For example, when a plurality of characters appear, the processor 120 may identify an associated scene in consideration of not only the character attributes of each scene, the background attributes of the respective scenes, and the event attributes that occur in each scene, but also the character relation attributes of each scene.

For example, when a plurality of characters appear, events such as a smiling expression, a happy expression, a sad expression, a kiss, and a hug of each character may be classified as "friendly relationship type", and expressions such as expressionless, events such as conversation, handshakes and walking may be classified as "neutral relationship type", and events such as angry facial expressions, scary facial expressions, grimace facial expressions or fighting may be be classified as "hostile relationship type". For example, in the case where two characters appear, when the event in which two characters hug each other is detected, the processor 120 may classify the character's relationship attribute into "friendly relationship type."

The processor 120 may compare the selected scenes and each scene of a video content by each attribute and calculate (determine) similarity by attributes. For example, the selected scene may be a scene which is selected by a user or a scene which a user is currently watching.

When similarity to a character attribute is determined, if all characters appearing in the selected scene and compared scene are matched, the processor 120 may, for example, identify the similarity value as 1, if some characters are matched, the processor may identify the similarity value as a value which is greater than 0 and less than 1, and if there is no matched character, the processor may identify the similarity value as 0. For example, when one character appears in the selected scene, and three characters including the corresponding character appear in the compared scene, one out of three is matched. Therefore, the processor 120 may identify the similarity of a character attribute as 0.33. For example, the compared scene may be a specific scene of the video content which is compared to identify the scene related to the selected scene. The similarity value is merely an example and the disclosure is not limited thereto.

When determining the degree of similarity with respect to the background attribute, the processor 120 may identify the similarity value as 1 if the background detected in the selected scene matches the detected background in the compared scene. When a type of the background detected in the selected scene is matched with a type of the background detected from the compared scene only, the similarity value may be identified as a value larger than 0 and smaller than 1. If the type of the background detected in the selected scene does not match the type of the background detected in the compared scene, the similarity value can be identified as 0.

For example, if the background area of the selected scene is the living room and the background area of the compared scene is also the living room, the processor 120 may identify the similarity value of the two scenes as 1, and when the background area of the selected scene is the living room, and the background area of the compared scene is a bedroom and thus, the background area is different but the type of the background area is the indoor type and thus is matched, the processor 120 may identify the similarity value of the two scenes as 0.5. If the background area of the selected scene is the living room, and the background area of the compared scene is a park and thus different, the processor 120 can identify the similarity value of the two scenes as 0.

When determining the similarity with respect to the event attribute, the processor 120 may identify the similarity value as 1 when the event detected in the selected scene matches the event detected in the compared scene, and only a type of the event detected from the selected scene matches the type of the event detected from the compared scene, the processor may identify the similarity value as a value that is greater than 0 and less than 1, and if the type of the event detected from the selected scene does not match a type of the event detected from the compared scene, the processor may identify the similarity value as 0.

For example, when the event of the selected scene is a dancing event and the event of a compared scene is also a dancing event, the processor 120 may identify the similarity value of the two scenes as 1, and when the event of the selected scene is a dancing event and when the event of the compared scene is a singing event and thus, all the two scenes are familiar event, having a matched type, the processor 120 may identify the similarity value of the two scenes as 0.5, and when the event of the selected scene is a dancing event, and the event of the compared scene is a fighting event, the processor 120 may identify the similarity value of the two scenes as 0.

The processor 120 may add up similarities of each attribute and identify whether the scenes are associated based on the added-up result.

The processor 120 may identify an associated scene if the summed similarity value is greater than or equal to a threshold value. When the maximum number of scenes that can be identified as the related scene is predetermined, the processor 120 may identify the scene as the associated scene as the predetermined number of scenes from the order in which the summed similarity value is large. The processor 120 may consider the summed similarity value and the maximum number of associated scenes together. In other words, even if the number of scenes in which the summed similarity value is equal to or greater than the threshold value is larger than the preset maximum number of scenes, from the greatest value of similarity, the associated scenes can be identified as much as the maximum number of scene.

For example, when the threshold value is 0.5, and the maximum number of associated scenes is set to three, if the summed similarity value is 0.9, 0.8, 0.7, and 0.6, the processor 120 may identify only three scenes having 0.9, 0.8, and 0.7 which is the higher similarity value in a descending order as associated scenes.

The processor 120 may apply different weights for a character attribute, a background attribute, and an event attribute based on video contents type and calculate similarity by attributes.

For example, the processor 120 may assign the greatest weight to the character attributes appearing in the drama contents, assign the lowest weight to the background attribute, and assign a high weight to the event attribute in case of action movies to calculate the degree of similarity.

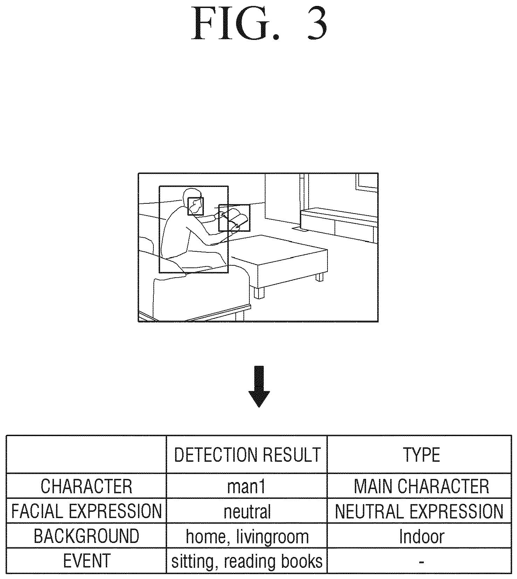

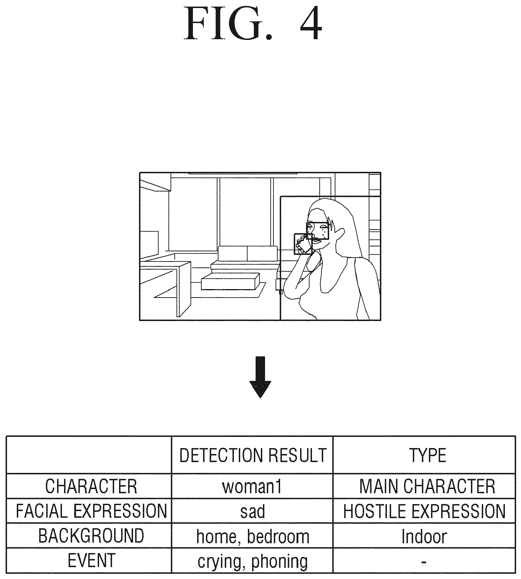

FIGS. 3 and 4 are diagrams illustrating various examples of attribute information which analyze scenes according to various example embodiments.

Referring to FIG. 3, the processor 120 may identify "man 1" as a main character based on the appearance frequency of the character "man 1", and since the facial expression is not detected as laughing or crying, the processor may identify the facial expression as "neutral facial expression type." The character attributes are classified into a main character and a neutral expression. The background attribute is classified as "indoor type", and for an event attribute, the object named "book" is detected for the event attribute, and the posture of the appearing character is seated and thus, the character can be classified as "reading a book."

Referring to FIG. 4, the processor 120 may classify a character attribute as "woman 1, main character, sad feeling." In addition, the background attribute can be classified as "indoor type," and event attribute can be classified as "calling state" as an object "telephone" is detected and facial expression is detected to be "sad."

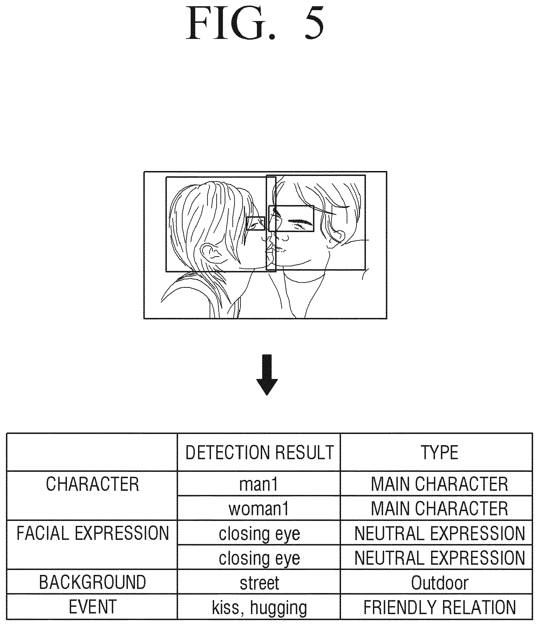

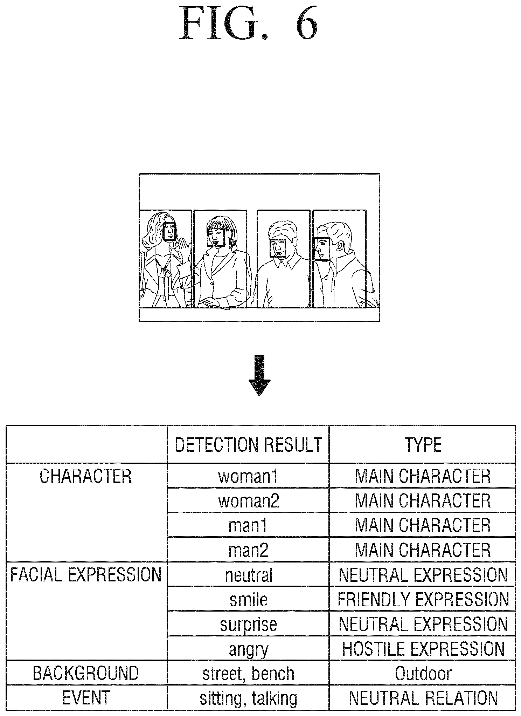

FIGS. 5 and 6 are diagrams illustrating example attributes of each scene when there are a plurality of appearing characters according to an example embodiment.

The processor 120, when there are a plurality of characters appearing in a scene, may classify an event of each scene based, for example, and without limitation, on at least one of a posture and a position of each character. In addition, the processor 120, based on at least one of facial expression and event attribute of each of a plurality of characters, may classify a relationship among a plurality of characters. The processor 120 may additionally obtain similarity relating to a character relation attribute of the selected scene and identify whether the scene is associated with the selected scene.

Referring to FIG. 5, the processor 120 may identify "man 1" and "woman 1" as main characters based on the appearance frequency of "man 1" and "woman 1". The processor 120, as the facial expression is detected as "closing eye", may identify facial expression as "neutral expression type," and as the background area is detected as "street", may identify the background area as "outdoor type," and identify an event of kiss and hugging based on the postures of two characters. In addition, a plurality of characters are appearing, a relationship among characters can be additionally identified. The processor 120 identifies the event of the scene as kiss and hugging, and may identify "man 1" and "woman 1" as in "close relationship type."

When there are a plurality of appearing characters, similarity on the relationship attribute among characters may additionally be considered. Thus, in case of searching for a scene associated with the scene of FIG. 5, not a scene in which "man 1" and "woman 1" merely appear, but a scene in which "man 1" and "woman 1" are identified as a close relationship can be identified as an associated scene.

Referring to FIG. 6, the processor 120 may identify the characters "woman 1", "woman 2", "man 1", and "man 2" as main characters based on the appearance frequency of "woman 1", "woman 2", "man 1", and "man 2". As the facial expression of "woman 1" is "neutral", the processor 120 identifies the expression as "neutral expression type," and facial expression of "woman 2" is "smile" and the processor identifies the type as "friendly expression type." As the face of "man 1" is "surprise", the processor may identify the type as "neutral expression type," and the facial expression of "man 2" is "angry", and the type can be identified as "hostile expression type."

The processor 120, as the background area is detected as "street" and "bench", may identify the type as "outdoor type", detect posture of each character, and identify "sitting" and "talking" event.

In addition, the processor 120 can additionally identify the relationship attributes between the characters. Events such as "sitting" and "talking" are detected, and facial expressions classified as "neutral facial expression type"1"," woman 2 "," man 1 "and" man 2 "can be identified as "neutral relations."

Therefore, in case of searching for an associated scene similar to the scene of FIG. 6, the scenes in which "woman 1", "man 1", and "man 2" are classified as neutral relationship can be identified as associated scenes.

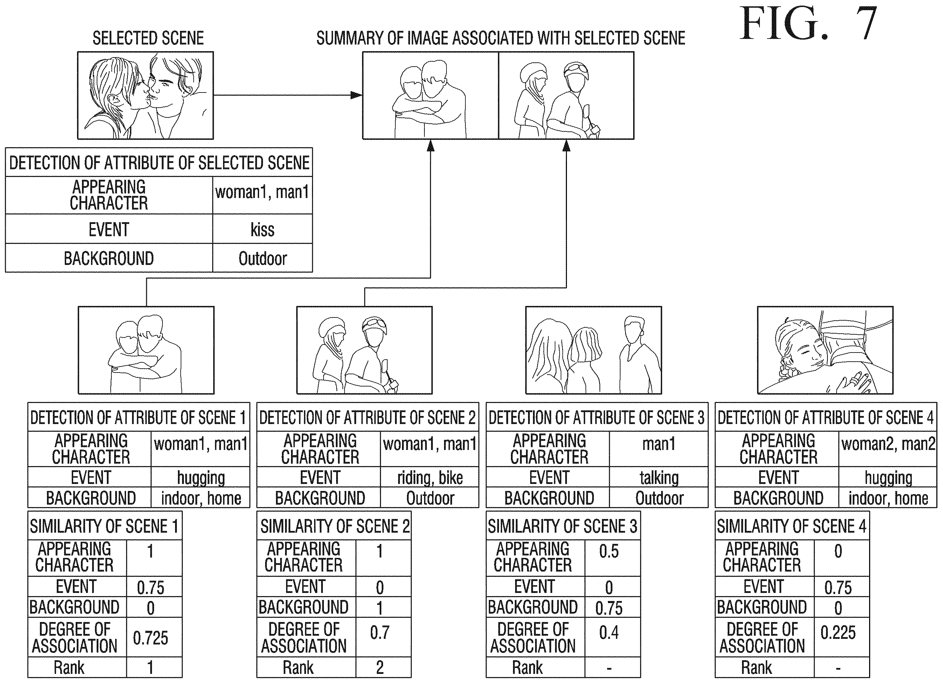

FIG. 7 is a diagram illustrating an example of a method of generating a summary image based on attributes according to an example embodiment.

The processor 120 calculates the similarity of the character attribute, the background attribute, and the event attribute occurring between the selected scene and the compared scene, and add the respective similarities to identify a scene associated with the selected scene based on the summation result. When there are a plurality of appearing characters, the processor 120 may additionally calculate the similarity of the relationship attributes between the characters, and may also identify the scenes associated with the selected scene by summing up the similarity with respect to the character relation attributes. Here, the compared scene may be a specific scene of the video content that is compared to identify the scene associated with the selected scene.

According to FIG. 7, as for the selected scene, the appearing characters are "woman" and "man 1," and the background area is street and thus it is classified as "outdoor type." The event is kiss and it can be classified as "friendly type." In addition, since there are a plurality of appearing characters, a character relation attribute can be additionally identified. Since the event was detected as kiss in the selected scene, the character relation attribute can be identified as "friendly relationship type."

The processor 120 can detect scene 1 to scene 4 based on the above-described attributes. Since the characters appearing in the scene 1 match the appearing characters in the scene selected as "woman 1" and "man 1", the similarity value to the emerging character is 1, the similarity value to the background area is 0, as the background area of scene 1 is different from the type of the selected scene. The event of scene 1 is "hugging" which is in the "friendly type", the same as "kiss" that is the event of the selected scene. The similarity value is 0.75. As there are a plurality of appearing characters, the similarity value regarding the character relation attribute can be additionally calculated. Based on the fact that the event in scene 1 is "hugging", the character relation attribute is classified as "friendly relation type", and the similarity value to the character relation attribute may be 0.5 because the types are the same. Since the sum of the similarity (degree of association) value of the selected scene with scene 1 is 0.725, scene 1 can be identified as the scene most similar to the selected scene from scene 1 to scene 4.

The character appearing in scene 2 is "woman 1" and "man 1" which are the same as the character of the selected scene. Thus, the similar value of the appearing character is 1, and the background area of scene 2 is street and thus the background area is the same as the selected scene. Thus, the similarity value of the background area is 1, and the event of scene 2 is "riding bike" which is classified as "neutral type" and thus is different from the event type of the selected scene. Thus, the similarity value can be 0. The character relation attribute is classified as "friendly relation type" based on "riding bike" and thus, the type is the same. The similarity value regarding the character relation attribute can be 0.5. The added similarity (degree of association) of the selected scene and scene 2 is 0.7, and scene 2 can be identified as second mostly similar scene with the selected scene from among scene 1 to scene 4.

The character of scene 3 is "man 1" which is partly the same as the appearing character of the selected scene and thus similarity value of the appearing character is 0.5. The background area of scene 3 is park and the type of the background area is the same as that of the selected scene and the similarity value of the background area is 0.75. The event of scene 3 is "talking" which is classified as "neutral type" and is different from the event type of the selected scene and similarity value can be 0. The character relation attribute can be classified as "neutral relation type" based on "talking" and the type is different and thus character relation attribute similarity value can be 0. The added similarity (degree of association) of the selected scene and scene 3 is 0.4, and scene 3 can be identified as third mostly similar scene with the selected scene from among scene 1 to scene 4.

The character appearing in scene 4 is "woman 2" and "man 2" which is different from the characters appearing in the selected scene, and the similarity value to the character is 0. The background area of scene 4 has a different type of background area as the scene selected as home, and thus, the similarity value to the background area is 0. The event of scene 4 is "hugging" and is classified as "friendly type" and has the same event type as the selected scene. Thus, the similarity value may be 0.75. The character relation attribute is classified as "friendly relationship type" based on "hugging", and the similarity value to the character relation attribute may be 0.5 because the types match with each other. Since the sum of the similarity (degree of association) value of the selected scene and the scene 4 is 0.225, scene 4 can be identified as a scene that is most unrelated to the selected scene from scene 1 to scene 4.

According to contents type, different weights may be applied to character attributes, background attributes, event attributes, and character relation attributes, and similarity by attribute can be calculated.

The threshold value for the summed similarity value may, for example, be set to 0.5, and the processor 120 may identify only the scene 1 and the scene 2 having the summed similarity value of 0.5 or more as an associated scene, and combine the scene 1 and the scene 2 in chronological order to generate a summary image. The maximum number of scenes that can be identified as an associated scene may be set to two, and the processor 120 may identify only scene 1 and scene 2 having a large value of the summed similarity as an associated scene, and combine scene 1 and scene 2 in chronological order to generate a summary image.

If the electronic device 100 of FIG. 1 does not have a display (not shown), the electronic device 100 may send a summary image to an external display device. For example, the electronic device 100 may operate, for example, and without limitation, as a server, set-top box, or the like. In this case, the electronic device 100 may include an external display device and an output port for outputting a video / audio signal, or may transmit the signal to an external display device through various types of wireless communication. When the electronic device 100 transmits video / audio signals together, the electronic device 100 may be provided with output ports such as HDMI, DP, Thunderbolt, etc., but a port for outputting video / audio signals can be provided.

The present disclosure is not limited thereto and may directly generate a summary image in an electronic device having a display.

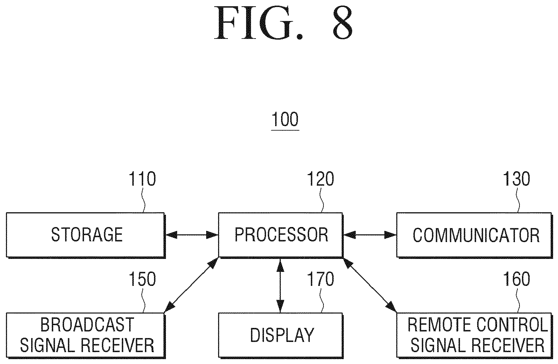

FIG. 8 is a block diagram illustrating an example configuration of an electronic device according to another example embodiment.

According to FIG. 8, the electronic device 100 includes a storage 110, a processor (e.g., including processing circuitry) 120, a communicator (e.g., including communication circuitry) 130, a broadcast signal receiver 150, a remote control signal receiver 160, and a display 170. From among the configurations of FIG. 8, the configurations overlapping with FIG. 1B will not be repeated here.

The processor 120 may include various processing circuitry and reproduces the content selected by the user from among the video content received through the communicator 130, the video content received through the broadcasting signal receiver 150, and the video content stored in the storage 110, and output the same to the display 170. When the processor 120 receives a user command for selecting a specific scene during content output through the remote control signal receiver 160, the processor 120 may detect scenes associated with the scene and generate a summary image as described above. Scene selection may be done in various manners depending on the example embodiments.

The display 170 displays a video content or a summary image of the video content. The display 170 may be implemented as various types such as, for example, and without limitation, a liquid crystal display (LCD), organic light-emitting diode (OLED), Liquid Crystal on Silicon (LCoS), Digital Light Processing (DLP), quantum dot (QD) display panel, or the like.

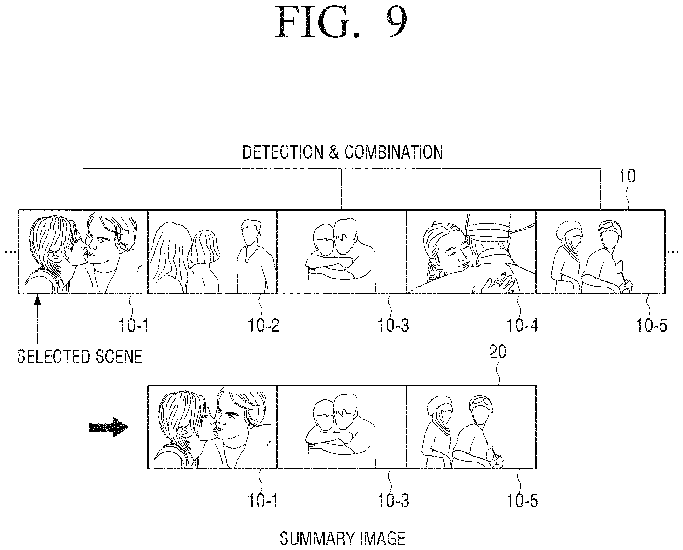

FIG. 9 is a diagram illustrating an example method for generating a summary image according to an example embodiment.

According to FIG. 9, the processor 120 may reproduce the video content 10, and output various frames on the display 170. The user can view the video content 10 and input a selection command by operating the remote controller in a desired scene. The user may manipulate the remote controller while watching the video content 10 and input a selection command. When the user selection command is input, the processor 120 determines that the scene which was output at the input timing is selected. The processor 120 may detect associated scenes having attributes associated with the selected scene. For example, as described in FIG. 7, when scene 10-1 is selected by the user, the processor 120 determines that scenes 10-3 and 10-5 having the degree of association with scene 10-1 as 0.725 and 0.7 as associated scenes. In case of scene 10-4, the event attribute is 0.75 and has the relevance, but the character attribute is 0 and thus, the final relevance is 0.225. Scene 10-2 may have no association with the scene 10-1. Therefore, scenes 10-2 and 10-4 are excluded from the associated scene.

As a result, the processor 120 may combine the associated scenes in a chronological order and generate the summary image 20.

In FIG. 9, it is described that a summary image is generated when a user manipulates a remote control button while watching a content, but the scene selection is not necessarily done like this, and various alternative example embodiments are available.

According to another embodiment, the processor 120 may simultaneously display each scene comprising the stored video content in a thumbnail form, and may receive selection of a specific scene from the user. The processor 120 can select and sample scenes that are displayed in the form of thumbnails. The user can easily select a scene of interest while checking various scenes at a glance. When a specific scene is selected, the processor 120 may detect an associated scene having an attribute associated with the selected scene to provide a summary image. The user does not necessarily have to select one scene only. If the user selects a plurality of scenes, the processor 120 may generate a summary image by searching all the scenes associated with each of the scenes selected by the user.

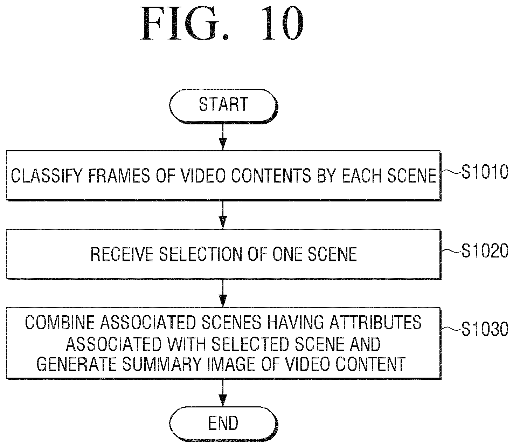

FIG. 10 is a flowchart illustrating an example method for generating a summary image of an electronic device according to an example embodiment

Referring to FIG. 10, the electronic device may classify frames which comprise at least a part of a video content by each scene in step S1010. Here, each scene may include frames that successively expression image components having relevant from among the frames of the video content.

The electronic device, when one scene is selected in step S1020, may combine associated scenes having attributes associated with the selected scene to generate a summary image of a video content in step S1030.

As described above, according to various example embodiments of the present disclosure, the step of detecting and storing a character attribute of each scene, a background attribute of each scene, an event attribute of each scene, and a character relation attribute and so on can be further included.

The method of detecting a character attribute, a background attribute, and an event attribute, a method for detecting attributes regarding a relationship among a plurality of characters, and a method of calculating similarity based thereon have been described above and thus the description will not be repeated here.

The summary image generation method as illustrated in FIG. 10 can be implemented by the electronic device of FIG. 1 and FIG. 8, but it is not limited thereto and can be implemented by various types of devices.

At least a part of the method according to various example embodiments described above can be implemented by software or hardware or any combination thereof.

At least some configurations from among the aforementioned example embodiments can be performed by an embedded server of the electronic device or an external server of the electronic device.

The various example embodiments described above can be implemented in a recording medium that can be read by a computer or similar device using software, hardware, or any combination thereof. In some cases, the embodiments described herein may be implemented by the processor itself. According to a software implementation, embodiments such as the procedures and functions described herein may be implemented in separate software modules. Each of the software modules may perform one or more of the functions and operations described herein.

Meanwhile, computer instructions for performing the processing operations according to various example embodiments of the present disclosure described above may be stored in a non-transitory computer-readable medium. Computer instructions stored on such non-transitory computer-readable media may cause a particular device to perform processing operations according to various embodiments described above when executed by a processor.

The non-transitory computer readable medium may refer, for example, to a medium that stores data semi-permanently, and is readable by an apparatus. For example, the above-described various applications or programs may be stored in the non-transitory computer readable medium such as, for example, and without limitation, a compact disc (CD), a digital versatile disc (DVD), a hard disk, a Blu-rayTM disc, a universal serial bus (USB), a memory card, a read only memory (ROM), or the like.

While the disclosure has been illustrated and described with reference to various example embodiments thereof, it will be understood by those skilled in the art that various changes in form and details may be made therein without departing from the scope of the invention as defined, for example, by the appended claims.

## Claims

1. An electronic device, comprising:
a storage configured to store a video content; and
a processor configured to combine associated scenes having an attribute associated with a selected scene and to generate a summary image of the video content, based on one of each scene comprising at least the part of the video content being selected,
wherein the each scene comprises frames which successively express associated image components from among frames of the video content.

2. The electronic device of claim 1, wherein the processor is configured to detect at least one of: a character attribute of the each scene, a background attribute of the each scene, and an event attribute occurring in the each scene, to control the electronic device to store the at least one of: a character attribute, background attribute and event attribute of the each scene in the storage, and to compare an attribute of the selected scene with an attribute of each scene stored in the storage.

3. The electronic device of claim 1 or 2, wherein the processor is configured to detect a character attribute of the each scene, a background attribute of the each scene, and an event attribute occurring in the each scene, and to control the electronic device to store the character attribute of the each scene, the background attribute of the each scene and the event attribute occurring in the each scene in the storage, and
wherein the processor is configured to compare the attributes of the each scene with the attributes of the selected scene and to identify associated scenes.

4. The electronic device of claim 3, wherein the processor is configured to detect at least one of: appearance frequency of each character appearing in the each scene and a facial expression type of the character and to control the electronic device to store the at least one of: appearance frequency of each character appearing in the each scene and a facial expression type of the character in the storage as a character attribute of the each scene.

5. The electronic device of claim 3, wherein the processor is configured to separate a background image from image components included in the each scene, to classify each background image by types, and to control the electronic device to store the classification result in the storage as a background attribute of the each scene.

6. The electronic device of claim 3, wherein the processor is configured to classify an event of the each scene based on at least one of: a posture and a position of a character appearing in the each scene, and to control the electronic device to store the classification result in the storage as an event attribute of the each scene.

7. The electronic device of claim 3, wherein the processor is configured to apply different weights for the character attribute, the background attribute, and the event attribute based on a type of the video content and to calculate a similarity of each attribute.

8. The electronic device of claim 3, wherein the processor is configured to, for a scene in which a plurality of characters appear, classify a relation among the plurality of characters using at least one of: a facial expression of each of the plurality of characters and the event attribute, and to control the electronic device to store the classification result in the storage as the character relation attribute of the scene.

9. The electronic device of any of claim 1 to claim 8, further comprising:
a display configured to display the video content,
wherein the processor is configured to, based on a user selection being input while the video content is displayed, recognize a scene displayed at an input timing as the selected image.

10. The electronic device of claim 1, wherein the processor is configured to identify frames which successively express the associated image components based on at least one of: a color histogram and an edge histogram.

11. A method for generating a summary image of an electronic device, the method comprising:
classifying frames which comprise a video content by each scene;
receiving a selection of one of the scenes; and
combining associated scenes having an attribute associated with the selected scene and generating a summary image of the video content,
wherein the each scene comprises frames which successively express associated image components from among frames of the video content.

12. The method of claim 11 further comprising:
detecting at least one of: a character attribute of the each scene, a background attribute of the each scene, and an event attribute occurring in the each scene, and
storing the at least one of: a character attribute of the each scene, a background attribute of the each scene, and an event attribute occurring in the each scene;
wherein the generating further comprises:
detecting an attribute of the selected scene; and
comparing the attributes of prestored scenes with the attributes of the selected scene and identifying the associated scenes.

13. The method of claim 11 or 12, further comprising:
detecting a character attribute of the each scene, a background attribute of the each scene, and an event attribute occurring in the each scene, and
storing the character attribute of the each scene, the background attribute of the each scene, and the event attribute occurring in the each scene;
wherein the generating further comprises:
detecting an attribute of the selected scene; and
comparing attributes of prestored scenes with attributes of the selected scenes and identifying the associated scenes.

14. The method of claim 13, wherein the character attribute includes information on at least one of: an appearance frequency of each character appearing in the each scene and a facial expression type of the character.

15. The method of claim 13, wherein the background attribute includes information on a type of a background image which is separated from image components included in the each scene.
